# EUROPÄISCHE PATENTANMELDUNG

(11) **EP 2 769 833 A1**
(43) Veröffentlichungstag der Anmeldung: **27.08.2014**
(21) Anmeldenummer: 14156255.3
(22) Anmeldetag: 21.02.2014
(51) Int. Cl.: B29C 70/46, B29C 70/54, B29C 70/56, B29C 70/34

(54) **Flächiges Leichtbaumaterial aus Verstärkungsfasern und thermoplastischem Kunststoff**

(30) Priorität: 21.02.2013 DE 102013101726
(71) Anmelder: Sorcole GmbH, 94116 Hutthurm (DE)
(72) Erfinder: BRUNNER, Günter, 94116 Hutthurm (DE); MÜLLER, Norbert, 94032 Passau (DE)
(74) Vertreter: Benninger, Johannes

(57) **Zusammenfassung**

Es ist ein flächiges Leichtbaumaterial offenbart, das im Wesentlichen aus Verstärkungsfasern und aus thermoplastischem Kunststoff unter Verwendung eines Rahmens und einer wenigstens zweiteiligen Pressform hergestellt ist bzw. wird. Das Material weist in unterschiedlichen Arealen jeweils unterschiedliche mechanische Eigenschaften, insbesondere unterschiedliche Steifigkeiten und/oder unterschiedliche Zug- und/oder Druckfestigkeiten auf. Auf den in die Pressform einlegbaren Rahmen sind Verstärkungsfasern in einer auf die Belastung und/oder Festigkeit des Leichtbaumaterials abgestimmten Orientierung und/oder Dichte und/oder Ausrichtung aufgespannt.

## Beschreibung

Die vorliegende Erfindung betrifft ein flächiges Leichtbaumaterial, das im Wesentlichen aus Verstärkungsfasern und thermoplastischem Kunststoff gebildet ist.

Flächige Leichtbaumaterialien, die aus Verstärkungsfasern und einem thermoplastischen Kunststoff bestehen, werden vorwiegend endlos in semikontinuierlichen oder kontinuierlichen Verfahren wie dem Heißintervallpressverfahren, dem Doppelbandpressverfahren oder dem Pultrusionsverfahren hergestellt.

Aus dem Stand der Technik sind verschiedene Verfahren zur Herstellung von Kunststoff-Faserverbundbauteilen bekannt. So offenbart bspw. die EP 0 423 676 A2 ein Verfahren zum Herstellen von spritzgegossenen Verbundbauteilen aus Kunststoff mittels einer mehrteiligen Spritzgussform. In eine untere Backe der Spritzgussform wird ein thermoplastischer Kunststoff eingelegt, wonach darauf ein Verstärkungsgewebeabschnitt aufgelegt wird. Auch auf einer der oberen Backe der Spritzgussform zugewandten Seite des Gewebeabschnittes wird eine thermoplastische Schicht aufgebracht, bevor die Backen gegeneinander bewegt und die Spritzgussform geschlossen wird.

Ein weiteres Spritzgießverfahren zur Herstellung von faserverstärkten Kunststoffbauteilen durch Einspritzen einer Thermoplastschmelze in ein Formwerkzeug ist in der WO 2011/020841 A1 offenbart. In einem ersten Verfahrensschritt wird dort ein flächiger Zuschnitt mit zwei oder mehreren Fasergeweben, die mit einem thermoplastischen Kunststoff getränkt sind, über dessen Erweichungstemperatur erwärmt. Anschließend wird der Zuschnitt an eine von zwei Innenwänden des Formwerkzeugs angelegt und dieses geschlossen, so dass der Zuschnitt verdichtet wird und die an den beiden Innenwänden anliegenden Randbereiche der Zuschnitte verfestigt werden und dort anhaften. In einem weiteren Verfahrensschritt wird das Werkzeug auf eine gewünschte Weite eingestellt und hierfür um einen geringen Betrag geöffnet und die Thermoplastschmelze eingespritzt. Durch Schließen des Werkzeuges wird die Schmelze im Zuschnitt verteilt. Nach dem Abkühlen kann das Werkzeug geöffnet und das fertige Bauteil entnommen werden.

Die DE 10 2009 024 789 A1 beschreibt ein weiteres Verfahren zur Herstellung von Formteilen aus faserverstärktem thermoplastischem Kunststoff. Als Faserverstärkung wird ein Textilwerkstoff vorgeschlagen, der in eine Spritzgussform eingelegt und mit thermoplastischem Kunststoff umspritzt oder durchspritzt wird.

Die DE 10 2011 014 686 A1 offenbart ein Verfahren zur Herstellung eines aus Verstärkungsfasern und aus thermoplastischem Kunststoff gebildeten flächigen Leichtbaumaterials, bei dem in einem ersten Schritt ein als Grundkörper oder Matrix für das Faserverbundmaterial des Leichtbaumaterials vorgesehene thermoplastische Kunststoff in eine noch leere Spritzgussform eingespritzt wird und nach dem Öffnen der Spritzgussform sowie gegebenenfalls Entnahme des Grundkörpers oder der Matrix aus der Spritzgussform in einem zweiten Schritt die Temperatur einer Kontaktfläche des Grundkörpers oder der Matrix und von als Verstärkung für das Faserverbundmaterial vorgesehenen Verstärkungsfasern erhöht wird, wonach in einem weiteren Schritt die als Verstärkung für das Faserverbundmaterial vorgesehenen Verstärkungsfasern auf dem Grundkörper oder der Matrix angeordnet werden, so dass die Verstärkungsfasern nach dem Erstarren des aufgeschmolzenen Bereichs fest mit dem Grundkörper oder der Matrix verbunden sind. Nach dem Anordnen der als Verstärkung für das Faserverbundmaterial vorgesehenen Verstärkungsfasern auf dem Grundkörper oder der Matrix kann durch Schließen des Werkzeugs eine Kraft auf die als Verstärkung für das Faserverbundmaterial vorgesehenen Verstärkungsfasern ausgeübt werden.

Die US 2006/289 293 A1 offenbart eine zusammengesetzte Spritzgussform mit einem Grund- oder Hauptkörper, einer auf dem Grund- oder Hauptkörper ausgebildeten Prägeschicht, sowie einer Schutzschicht, die wiederum auf der Prägeschicht aufgebracht ist. Die Spritzgussform umfasst eine obere Seite und eine untere Seite, die beide den gleichen Schichtaufbau aufweisen. Die obere Seite und die untere Seite können unterschiedliche Oberflächenstrukturierungen aufweisen.

Aus der DE 102 59 883 A1 ist ein Verfahren zur Herstellung eines Verbundwerkstoffs aus orientierten und nicht orientierten Thermoplasten bekannt. Die Thermoplaste werden auf eine Temperatur oberhalb des Schmelzpunkts der höher schmelzenden Thermoplaste erwärmt. Die orientierten Thermoplaste werden in Richtung ihrer Orientierung unter Spannung gehalten. Durch das Halten unter Spannung ist der Schmelzpunkt der orientierten Thermoplaste höher, als der Schmelzpunkt der höher schmelzenden Thermoplaste. Fasern und/oder Bändchen enthaltend orientierte Thermoplaste können zur Verstärkung des Verbundwerkstoffs in die als Matrix dienenden, nicht orientierten Thermoplaste eingebracht werden.

Die DE 35 42 217 A1 offenbart schließlich ein Verfahren zur Herstellung faserverstärkter Bauteile aus Thermoplasten, bei dem Vorformlinge aus Thermoplast und Vorformlinge aus Verstärkungsfasern durch Druck und Wärme miteinander verbunden werden.

Die in der bekannten Weise hergestellte Platten- oder Rollenware kann zwar gerichtete Eigenschaften aufweisen, womit im Wesentlichen eine Vorzugsorientierung gemeint ist. Dem Grundsatz nach sind die Eigenschaften der Erzeugnisse aber in allen Bereichen der Fläche weitgehend gleich. Diese in etwa gleichen mechanischen Eigenschaften der flächigen Erzeugnisse in den Vorzugsrichtungen bzw. in allen Bereichen sind für kontinuierlich produzierte Platten-, Band- oder Bahnware charakteristisch. Etwaige kleine lokale Unterschiede, z.B. bei der Dicke und dem Faservolumengehalt, sind unerwünschte Prozessschwankungen bzw. -abweichungen.

Ein vorrangiges Ziel der vorliegenden Erfindung besteht dagegen darin, ein flächiges Leichtbaumaterial zur Verfügung zu stellen, das aus faserverstärktem thermoplastischem Kunststoff hergestellt wurde, und dem gezielt bestimmte, bei Bedarf lokal den jeweiligen Anforderungen entsprechend angepasste mechanische Eigenschaften eingeprägt sind.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen. Zur Erreichung des genannten Ziels schlägt die Erfindung ein flächiges Leichtbaumaterial mit den Merkmalen des unabhängigen Anspruchs vor, das im Wesentlichen aus Verstärkungsfasern und aus thermoplastischem Kunststoff hergestellt ist. In unterschiedlichen Arealen kann das Material jeweils unterschiedliche mechanische Eigenschaften, insbesondere unterschiedliche Zug- und/oder Druckfestigkeiten aufweisen, wodurch es auf typische Lastfälle im Einsatz maßgeschneidert werden kann. Zudem kann mit einem solchen Leichtbaumaterial ein Material, Bauteil oder Halbzeug zur Verfügung gestellt werden, das in unterschiedlichen Bereichen jeweils unterschiedliche Steifigkeiten aufweist, was in der Praxis besonders wichtig zur Herstellung maßgeschneiderter Materialien oder Halbzeuge ist, die damit in spezifischer Weise an die individuellen Belastungs- und Verwendungsanforderungen angepasst werden können.

Das erfindungsgemäße flächige Leichtbaumaterial, das im Wesentlichen aus Verstärkungsfasern und aus thermoplastischem Kunststoff gebildet ist, lässt sich insbesondere unter Verwendung eines Rahmens und einer wenigstens zweiteiligen Pressform herstellen, so dass ihm in unterschiedlichen Arealen jeweils unterschiedliche mechanische Eigenschaften, insbesondere unterschiedliche Steifigkeiten und/oder unterschiedliche Zug- und/oder Druckfestigkeiten auf- oder eingeprägt werden können, wobei auf den in die Pressform einlegbaren Rahmen Verstärkungsfasern in einer auf die Belastung und/oder Festigkeit des Leichtbaumaterials abgestimmten Orientierung und/oder Dichte und/oder Ausrichtung aufgespannt sind. Insbesondere die Materialstärke und/oder der Faservolumengehalt und/oder die Faserorientierung und/oder der Gewebeaufbau und/oder der Gelegeaufbau können in verschiedenen Bereichen des flächigen Leichtbaumaterials jeweils unterschiedlich sein, was sich mit dem in die Pressform einlegbaren Rahmen in einfacher und jederzeit reproduzierbarer Weise gewährleisten lässt. Ein bevorzugtes Verfahren zur Herstellung des erfindungsgemäßen flächigen Leichtbaumaterials wird weiter unten in seinen aufeinander aufbauenden Verfahrensschritten näher beschrieben.

Bei dem erfindungsgemäßen flächigen Leichtbaumaterial können insbesondere eine Materialstärke und/oder ein Faservolumengehalt und/oder eine Faserorientierung und/oder ein Gewebeaufbau und/oder ein Gelegeaufbau in verschiedenen Bereichen des flächigen Leichtbaumaterials jeweils unterschiedlich sein. Auch können in verschiedenen Bereichen des flächigen Leichtbaumaterials Bereiche mit quasi-isotropem Laminataufbau vorliegen. Wahlweise können auch in verschiedenen Bereichen des flächigen Leichtbaumaterials Bereiche mit orthotropem Laminataufbau vorliegen. Eine vorteilhafte Variante kann vorsehen, dass in verschiedenen Bereichen des flächigen Leichtbaumaterials Bereiche mit einem Laminataufbau mit Vorzugsorientierung und/oder Bereiche mit unidirektionalem Laminataufbau vorliegen.

Als Verstärkungsfasern können bspw. Glasfasern, Kohlenstofffasern und/oder Aramidfasern verwendet werden. Als thermoplastischer Kunststoff kann bspw. Polypropylen, thermoplastisches Polyurethan, Polyamid, Polybutylenterephtalat, Polyphenylensulfid, Polyetheretherketon, Polysulfon und/oder Polyphenylsulfon zum Einsatz kommen.

Die Verstärkungsfasern können bspw. in Form von Geweben oder Gelegen eingebracht sein. Wahlweise können die Verstärkungsfasern auch in Form von einzelnen Filamentgarnen oder Rovings eingebracht sein. Dabei kann vorsehen sein, dass die Verstärkungsfasern in Form von Filamentgarnen oder Rovings immer an der gleichen Stelle und nach dem gleichen Muster in das flächige Leichtbaumaterial eingebracht sind.

Bei dem erfindungsgemäßen flächigen Leichtbaumaterial kann die Form nahezu beliebig sein und insbesondere von der Kontur einer ebenen Platte abweichen; das Leichtbaumaterial kann je nach Bedarf entsprechend der Kontur des daraus herzustellenden Bauteils gekrümmt sein.

Flächige Leichtbaumaterialien, die aus Verstärkungsfasern und einem thermoplastischen Kunststoff bestehen, sind normalerweise als Platten- oder Rollenware verfügbar. Sie werden vorwiegend in semi-kontinuierlichen oder kontinuierlichen Verfahren wie dem Heißintervallpressverfahren, dem Doppelbandpressverfahren oder dem Pultrusionsverfahren hergestellt. Diese vorgenannten Verfahren führen zu Leichtbaumaterialien, sogenannten Organoblechen und Tapes, die zwar gerichtete Eigenschaften, d.h. eine Vorzugsorientierung aufweisen können, deren Eigenschaften aber in allen Bereichen der Fläche gleich sind. Etwaige kleine lokale Unterschiede z.B. bei der Dicke und dem Faservolumengehalt, sind unerwünschte Prozessschwankungen bzw. -abweichungen.

Wenn aus den verfügbaren flächigen Leichtbaumaterialien, bestehend aus Verstärkungsfasern und einem thermoplastischen Kunststoff, anspruchsvolle Leichtbaukonstruktionen aufgebaut werden sollen, dann müssen zahlreiche Zuschnitte, zum Teil auch aus unterschiedlichen Varianten der verfügbaren flächigen Leichtbaumaterialien, in einem aufwändigen Verarbeitungsprozess zusammengefügt werden.

Wird der konstruktive Aufbau vereinfacht, so dass eine Teilefertigung mit weniger Zuschnitten möglich ist, dann ist kein optimales Leichtbauteil mehr darstellbar, d.h. die Konstruktion fällt schwerer aus als notwendig. Somit ist Leichtbau auf hohem technischen Niveau, mit Verwendung von etablierten Leichtbaumaterialien aus Verstärkungsfasern und einem thermoplastischen Kunststoff, mit einem aufwändigen, häufig auch mehrstufigen Verarbeitungsprozess verbunden.

Die vorliegend Erfindung stellt flächige Leichtbaumaterialien zur Verfügung, deren Eigenschaften sich in unterschiedlichen Bereichen des flächigen Leichtbaumaterials deutlich voneinander unterscheiden. Im Besonderen kann die Dicke, oder der Faservolumengehalt, oder die Faserorientierung, oder der Gewebeaufbau, oder der Gelegeaufbau, oder mehrere der vorgenannten Eigenschaften in verschiedenen Bereichen des flächigen Leichtbaumaterials unterschiedlich sein. Das flächige Leichtbaumaterial kann Bereiche mit quasi-isotroptem Laminataufbau, mit orthotropem Laminataufbau, mit einem Laminataufbau mit Vorzugsorientierung und mit einem unidirektionalen Laminataufbau aufweisen.

Das flächige Leichtbaumaterial ist vorzugsweise aus Verstärkungsfasern wie Glasfasern, Kohlenstofffasern, oder Aramidfasern und aus thermoplastischem Kunststoff wie Polypropylen, thermoplastisches Polyurethan, Polyamid, Polybutylenterephtalat, Polyphenylensulfid, Polyetheretherketon, Polysulfon, oder Polyphenylsulfon aufgebaut. Die Verstärkungsfasern können dabei in Form von Geweben oder Gelegen eingebracht sein, oder in Form von eingebetteten einzelnen Filamentgarnen oder Rovings in dem flächigen Leichtbaumaterial vorliegen.

Das flächige Leichtbaumaterial mit bereichsweise unterschiedlichen Eigenschaften bieten den Vorteil, ein Material bei der Herstellung von Leichtbauteilen verwenden zu können, bei dem die lokale Dicke, die lokale Faserorientierung, der lokale Gewebe- oder Gelegeaufbau und der lokale Faservolumengehalt bereits so angelegt sind, dass bei dem hergestellten Bauteil das notwendige Leistungsvermögen bei besonders geringem Gewicht erreicht wird.

Die Verarbeitung ist dabei gegenüber dem Stand der Technik wesentlich vereinfacht, weil nur wenige, im Normalfall sogar nur ein einziger Zuschnitt von dem flächigen Leichtbaumaterial mit bereichsweise unterschiedlichen Eigenschaften verarbeitet werden muss. Die Verwendung von flächigen Leichtbaumaterialien mit bereichsweise unterschiedlichen Eigenschaften, gefertigt aus Verstärkungsfasern und thermoplastischem Kunststoff, erlaubt es daher Leichtbauteile mit besonders hohem Leistungsvermögen und besonders geringem Gewicht in großen Stückzahlen einfach und verlässlich herzustellen.

Aus dem flächigen Leichtbaumaterial mit bereichsweise unterschiedlichen Eigenschaften können unter anderem Teile für den Automobilbau, Sportgeräte, medizinische Hilfsmittel, Protektoren, Handwerkzeuge und leichte sowie robuste Transportbehälter gefertigt werden. Den Produkten, bei denen der Einsatz der flächigen Leichtbaumaterialien mit bereichsweise unterschiedlichen Eigenschaften in Betracht kommt, ist gemeinsam, dass eine hohe Steifigkeit und Festigkeit bei möglichst geringem Gewicht gefordert sind.

Wenn im vorliegenden Zusammenhang auch meist von flächigen Leichtbaumaterialien oder auch von Bauteilen die Rede ist, so ist damit in aller Regel ein sog. Halbzeug gemeint, das eine Fertigungszwischenstufe vor einer Weiterverarbeitung darstellt. Diese Halbzeuge aus flächigem Leichtbaumaterial sind in den meisten Fällen keine fertigen oder einbaufertigen Bauteile, sondern Rohteile, die weiterbearbeitet, weiterverarbeitet und ggf. noch weiter modifiziert werden, bevor sie ihren Endzustand als Bestandteile fertiger Bauteile oder komplexer Erzeugnisse erreichen.

Das erfindungsgemäße flächige Leichtbaumaterial kann vorzugsweise mit einem Verfahren hergestellt werden, das nachfolgend näher erläutert wird. Das Verfahren zur Herstellung des im Wesentlichen aus Verstärkungsfasern und aus thermoplastischem Kunststoff gebildeten flächigen Leichtbaumaterials sieht vor, dass in einem ersten Schritt der als Matrix für das Faserverbundmaterial des Leichtbaumaterials vorgesehene thermoplastische Kunststoff in eine noch leere Pressform eingespritzt wird. Nach dem Öffnen der Pressform werden in einem zweiten Schritt die als Verstärkung für das Faserverbundmaterial bzw. das Leichtbaumaterial vorgesehenen, in einem außerhalb der Pressform vorbereiteten Rahmen aufgespannten Verstärkungsfasern mitsamt dem Rahmen in die Form eingebracht, wonach in einem dritten Schritt die Pressform geschlossen wird und durch Verpressen die Verstärkungsfasern mit der thermoplastischen Matrix imprägniert werden. Gemäß der vorliegenden Erfindung wird bei diesem Verfahren zur Einbringung der Verstärkungsfasern ein Rahmen verwendet, in dem die Verstärkungsfasern außerhalb der Pressform aufgespannt werden und mit dem die Verstärkungsfasern in das Presswerkzeug eingebracht werden. Die Abmessungen des Rahmens richten sich nach der Größe des herzustellenden Leichtbaumaterials. Die Bespannung des Rahmens erfolgt vorzugsweise auf maschinelle und automatisierte Weise, insbesondere mit Hilfe eines Webroboters, wonach der fertig bespannte Rahmen mittels geeigneter Handlingseinrichtungen, bspw. mittels eines Handlingroboters in die geöffnete Form eingebracht werden kann, die anschließend mit dem darin befindlichen Rahmen geschlossen werden kann, um den thermoplastischen Kunststoff in die Form einzuspritzen.

Wahlweise kann bei dem Verfahren vorgesehen sein, dass der Rahmen nach Verpressen der Verstärkungsfasern im dritten Schritt von den Fasern getrennt wird und/oder aus der Pressform entnommen wird. Ggf. kann es je nach Konfiguration der Pressform auch sinnvoll sein, den Rahmen zunächst in der Form zu belassen und erst nach Fertigstellung des kompletten Bauteils, ggf. nach dessen Abkühlung von den Fasern zu trennen. Diese Trennung kann bspw. dadurch erfolgen, dass das Bauteil am Rand beschnitten wird, so dass die nach am Rahmen verbleibenden Faserreste entfernt und der Rahmen für einen weiteren Pressvorgang erneut mit dem Webroboter verarbeitet und mit einer weiteren Lage an Verstärkungsfasern bestückt werden kann.

Die Verwendung eines solchermaßen definierten Rahmens hat bei dem Verfahren zur Herstellung des erfindungsgemäßen Bauteils den besonderen Vorteil, dass die Verstärkungsfasern in gewünschter Weise innerhalb der vom Rahmen ausgespannten Fläche verteilt werden können. So können die Verstärkungsfasern insbesondere in einer auf die Materialeigenschaften des Leichtbaumaterials abgestimmten belastungsgerechten Orientierung in dem Rahmen aufgespannt werden, wodurch sich die Material-, Elastizitäts- und Festigkeitseigenschaften des auf diese Weise hergestellten Bauteils gezielt beeinflussen und definieren lassen.

Wahlweise kann bei dem Verfahren vorgesehen sein, dass die Verstärkungsfasern zumindest abschnittsweise parallel und/oder in sich in spitzen und/oder stumpfen Winkeln zueinander kreuzenden Winkeln auf den Rahmen aufgespannt werden. Alternativ oder arealweise kann auch vorgesehen sein, dass die Verstärkungsfasern in auf die Materialeigenschaften des Leichtbaumaterials abgestimmter belastungsgerechter Dichte und/oder Abständen zueinander in dem Rahmen aufgespannt werden. Dabei kann weiterhin vorgesehen sein, dass die Verstärkungsfasern zumindest bereichsweise in annähernd gleichmäßiger Dichte über die vom Rahmen aufgespannte Fläche verteilt werden. Alle diese verschiedenen Varianten der Verarbeitung der Verstärkungsfasern mit Hilfe des verwendeten Rahmens dienen dazu, die Material-, Elastizitäts- und Festigkeitseigenschaften des Bauteils in seinen verschiedenen Bereichen weitgehend individuell und in jeweils unterschiedlicher Weise beeinflussen und definieren zu können, ohne dass damit eine homogene Gesamteigenschaft definiert werden muss, die an allen Stellen des Bauteils gleichermaßen vorliegt.

Mit dem Verfahren ist es möglich, flächige Leichtbaumaterialien mit einem Gewebe- oder Gelegeaufbau mit exakt definierbaren Eigenschaften herzustellen. Ein solcher Aufbau lässt sich mit den bisher bekannten kontinuierlichen Herstellverfahren, insbesondere im Heißintervallpressverfahren und im Doppelbandpressverfahren, nicht realisieren. Mit den herkömmlichen Herstellverfahren werden Materialaufbauten erreicht, bei denen die Faserausrichtung jeweils in Produktionsrichtung (Kettrichtung) und in 90°-Ausrichtung dazu (Schussrichtung) ausgerichtet sein kann.

Dagegen können mit dem beschriebenen Verfahren Verbundmaterialien mit einem nahezu beliebigen Gewebe- und Gelegeaufbau hergestellt werden. Im Besonderen können damit auch quasi-isotrope Gewebe- und Gelegeaufbauten z.B. mit drei, vier oder fünf Faserrichtungen hergestellt werden. Daneben sind spezielle Unidirektionalaufbauten wie bspw. ein sog. -15/0/15°-Aufbau herstellbar.

Das beschriebene Verfahren ermöglicht es darüber hinaus, den thermoplastischen Kunststoff mit geringem Aufwand zu wechseln, wodurch eine laufende Produktion jederzeit und ohne große Verluste umgestellt und bspw. mit einem UV-stabilisierten Kunststoff oder mit einem anders eingefärbten Kunststoff fortgeführt werden kann. Bei den etablierten kontinuierlichen Verfahren ist ein Material- oder Farbwechsel hingegen mit wesentlich größerem Zeitaufwand und mit erheblichen Anfahrverlusten verbunden, weil während des Materialwechsels auch Verstärkungsgewebe zugeführt werden müssen.

Bei dem Verfahren kann vorgesehen sein, dass als Pressform eine Form verwendet wird, die innerhalb eines Fertigungszyklus' beheizt und wieder gekühlt werden kann, wodurch während des Einspritzens des thermoplastischen Kunststoffs und während des Imprägnierens der Verstärkungsfasern mit dem thermoplastischen Kunststoff an Teilen der Pressform oder an der ganzen Pressform eine so hohe Temperatur vorliegt, dass der thermoplastische Kunststoff sich nicht verfestigt. Zur Beheizung der Pressform können bspw. elektrische Widerstandheizungen, induktive elektrische Heizungen oder Heizungen mit Medienkanälen eingesetzt werden, die von druckbeaufschlagtem Heißwasser, aufgeheiztem Öl, oder Dampf durchströmt werden.

Wahlweise können auch Teile der Pressform oder die ganze Pressform nach Abschluss der Imprägnierung der Verstärkungsfasern mit dem thermoplastischen Kunststoff abgekühlt werden, wodurch sich der thermoplastische Kunststoff verfestigt und das flächige Leichtbaumaterial aus der Form entnommen werden kann. Zur Kühlung der Pressform können insbesondere Bauteile oder Werkzeugabschnitte mit Medienkanälen verwendet werden, die von Wasser oder Stickstoff durchströmt werden.

Als Verstärkungsfasern eignen sich bspw. Glasfasern, Kohlenstofffasern, Aramidfasern, Basaltfasern oder auch andere mechanisch ausreichend stabile und automatisch verarbeitbare Fasern. Als thermoplastischer Kunststoff kann bspw. Polypropylen, thermoplastisches Polyurethan, Polyamid, Polybutylenterephtalat, Polyphenylensulfid, Polyetheretherketon, Polysulfon, Polyphenylsulfon oder ein anderes geeignetes Thermoplastmaterial eingesetzt werden. Die verwendeten Verstärkungsfasern können bspw. in Form von trockenen oder vorbenetzten Geweben oder Gelegen in die Pressform eingebracht werden. Wahlweise ist es auch möglich, die Verstärkungsfasern in Form von trockenen oder vorbenetzten Filamentgarnen oder Rovings in die Pressform einzubringen.

Die vorliegende Erfindung umfasst schließlich eine Pressform, deren beide Hälften in jedem Herstellzyklus aufgeheizt und wieder abgekühlt werden können. Damit wird erreicht, dass sich der thermoplastische Kunststoff während des Einspritzens und während des Imprägnierens der Verstärkungsfasern mit dem thermoplastischen Kunststoff nicht verfrüht verfestigt. Erst wenn die notwendige Imprägnierung der Fasern unter Einwirkung von Druck, der von der Presse aufgebracht wird, und Temperatur, die im Formhohlraum durch die Beheizung aufrechterhalten wird, erreicht ist, werden Teile der Pressform oder die ganze Pressform abgekühlt, wodurch sich der thermoplastische Kunststoff verfestigt und das flächige Leichtbaumaterial aus der Pressform entnommen werden kann. Eine Variante der verwendeten Pressform kann vorsehen, dass zur Beeinflussung der Anhaftung und Ablösung des eingespritzten Thermoplastmaterials an den beiden Seiten der Pressform unterschiedliche Oberflächenstrukturierungen eingearbeitet sind. Wahlweise können an den beiden Seiten der Pressform unterschiedliche Oberflächenbeschichtungen aufgebracht sein.

Wie oben erwähnt, ist bei dem Verfahrens vorgesehen, zur Einbringung der Verstärkungsfasern einen Rahmen zu verwenden, in dem die Verstärkungsfasern außerhalb der Pressform aufgespannt werden und mit dem die Verstärkungsfasern in das Presswerkzeug eingebracht werden. So können bspw. die Verstärkungsfasern in Form von Filamentgarnen oder Rovings an Umlenkpunkten oder Anschlagpunkten am Rahmen oder an der Pressform angeschlagen werden, wodurch die Verstärkungsfasern immer an der gleichen Stelle eingebracht werden. Der Rahmen kann aus der Pressform entnommen werden und die Verstärkungsfasern in Form von Geweben, Gelegen, einzelnen Filamentgarnen oder Rovings können darin aufgespannt werden. Der dergestalt mit den Verstärkungsfasern bestückte Rahmen wird anschließend in das Presswerkzeug eingelegt, wo die Verstärkungsfasern mit dem thermoplastischen Kunststoff imprägniert werden.

Bei der Imprägnierung der Verstärkungsfasern mit dem thermoplastischen Kunststoff findet keine ausgeprägte Strömung der Schmelze statt, weil der Schritt "Einströmen der Kunststoffschmelze in die Pressform" von dem Schritt "Imprägnieren der Verstärkungsfasern" getrennt wurde. Der Aufbau aus den Verstärkungsfasern wird nur in Dickenrichtung verpresst. Damit werden unerwünschte Verschiebungen des Verstärkungsaufbaus fast vollständig eliminiert. Die Verstärkungsgewebe sowie einzelne Filamentgarne und Rovings werden überdies vorzugsweise in einem Rahmen gehalten. Auch damit werden unerwünschte Verschiebungen stark vermindert.

Die vorliegende Erfindung bezieht sich schließlich auch auf eine besondere Gestaltung des Rahmens oder der Pressform, bei der mechanische Anschlag- oder Umlenkstellen für die einzubringenden Filamentgarne oder Rovings, beispielsweise in Form von Stiften, eingearbeiteten sind. Diese besondere Gestaltung erlaubt es Leichtbaumaterialien herzustellen, bei denen die Verstärkungsfasern immer an der gleichen Stelle der flächigen Erzeugnisse vorzufinden sind. Somit ist mit dem erfindungsgemäßen Verfahren eine stark verbesserte Qualitätskonstanz möglich. Dies gestattet wiederum die Fertigung von Leichtbaukonstruktionen mit kleinen Abminderungsfaktoren und schließlich leichtere Bauteile.

Die Herstellung der erfindungsgemäßen flächigen Leichtbaumaterialien mit dem beschriebenen Verfahren lässt es zu, wichtige Eigenschaften des Materials in verschiedenen Bereichen unterschiedlich auszuführen. So kann durch eine bereichsweise veränderte Bestückung des Rahmens und entsprechender Gestaltung der Pressform bereichsweise die Dicke, oder der Faservolumengehalt, oder die Faserorientierung, oder der Laminataufbau verschieden ausgeführt werden. Ebenso können mehrere der vorgenannten Eigenschaften zugleich variiert werden und es können in derselben Platte verschiedene Verstärkungsfasern, z.B. Aramidfasern und Kohlenstofffasern, zum Einsatz gebracht werden.

Darüber hinaus kann auch das Format gemäß den Erfordernissen, die vom Produkt vorgegeben sind, angepasst werden. Neben rechteckigen Formaten sind auch andere Konturen wie trapezförmige, ovale, und kreisrunde Formate herstellbar. Durch Anpassung des Formats kann der Materialverschnitt bei der späteren Herstellung der Bauteile aus den flächigen Leichtbaumaterialien auf ein Minimum verringert oder ganz vermieden werden.

Somit erlaubt das Verfahren die Herstellung von flächigen Leichtbaumaterialien, deren Eigenschaften bereichsweise bereits auf die Anforderungen der daraus herzustellenden Bauteile abgestimmt sind. Mit diesen bereichsweise angepassten Leichtbaumaterialien können besonders leistungsstarke Bauteile mit besonders geringem Gewicht einfach und in großer Stückzahl hergestellt werden.

Es sei an dieser Stelle nochmals erwähnt, dass die im vorliegenden Zusammenhang erwähnten flächigen Leichtbaumaterialien oder Bauteile ebenso sog. Halbzeuge umfassen, die eine Fertigungszwischenstufe vor einer Weiterverarbeitung darstellen. Diese Halbzeuge aus flächigem Leichtbaumaterial sind in den meisten Fällen keine fertigen oder einbaufertigen Bauteile, sondern Rohteile, die weiterbearbeitet, weiterverarbeitet und ggf. noch weiter modifiziert werden, bevor sie ihren Endzustand als Bestandteile fertiger Bauteile oder komplexer Erzeugnisse erreichen.

Im Folgenden sollen Ausführungsbeispiele die Erfindung und ihre Vorteile anhand der beigefügten Figur näher erläutern.
Fig. 1 zeigt aufeinander folgende Verfahrensschritte bei der Herstellung eines erfindungsgemäßen thermoplastischen Leichtbaumaterials mit Faserverstärkung.
Fig. 2 zeigt in insgesamt elf aufeinander folgenden Prozessschritten die Herstellung eines erfindungsgemäßen thermoplastischen Leichtbaumaterials mit Faserverstärkung in einer zweiteiligen Pressform.
Fig. 3 zeigt vier schematische Darstellungen verschiedener Leichtbaumaterialien aus thermoplastischem Kunststoff und Verstärkungsfasern, die dem erfindungsgemäßen Verfahren herstellbar sind. Zudem ist in Fig. 3 auch jeweils der Rahmen dargestellt, der bei der Herstellung der Leichtbaumaterialien vorzugsweise zum Einsatz kommt.
Fig. 4 zeigt in zwei perspektivischen Ansichten ein Ausführungsbeispiel eines Rahmens zur Aufspannung von Gewebe- oder Faserverstärkungen, wie er zur Herstellung eines Leichtbaumaterials verwendet werden kann.

Die dargestellten Ausführungsformen stellen lediglich Beispiele dar, wie das erfindungsgemäße Verfahren ausgestaltet sein kann, sind jedoch nicht als abschließende Begrenzung zu verstehen.

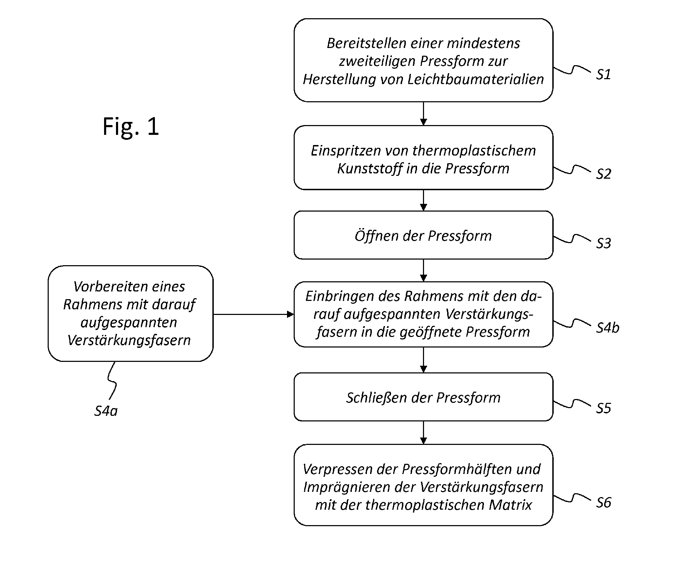

Die Fig. 1 verdeutlicht aufeinander folgende Verfahrensschritte bei der Herstellung eines erfindungsgemäßen Leichtbaumaterials mit Faserverstärkung. Hierbei wird in einem ersten Schritt S1 eine mindestens aus zwei Teilen bestehende Pressform für das Herstellen des Leichtbaumaterials bereitgestellt. In diese zunächst geschlossene Pressform wird in einem zweiten Schritt S2 thermoplastischer Kunststoff eingespritzt, wonach in einem dritten Schritt S3 die Pressform geöffnet werden kann, um in einem vierten Schritt S4b die zu verwendenden Verstärkungsfasern in die geöffnete Pressform eingelegt wird. Die im vierten Schritt S4b in die geöffnete Pressform eingebrachten Verstärkungsfasern wurden zuvor in einem vorgelagerten Schritt S4a auf einem Rahmen aufgespannt, der in fertig vorbereiteter Form in die Pressform eingelegt wird. Anschließend erst wird in einem fünften Schritt S5 die Pressform geschlossen. In einem sechsten Schritt S6 werden die Pressformhälften miteinander verpresst, wodurch die Verstärkungsfasern mit der thermoplastischen Matrix imprägniert werden.

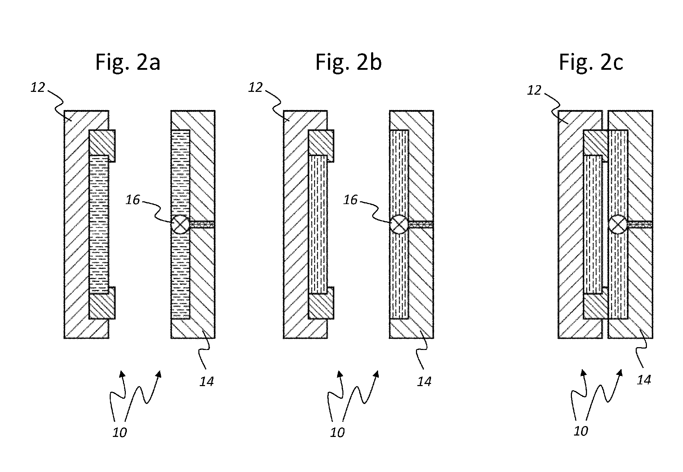

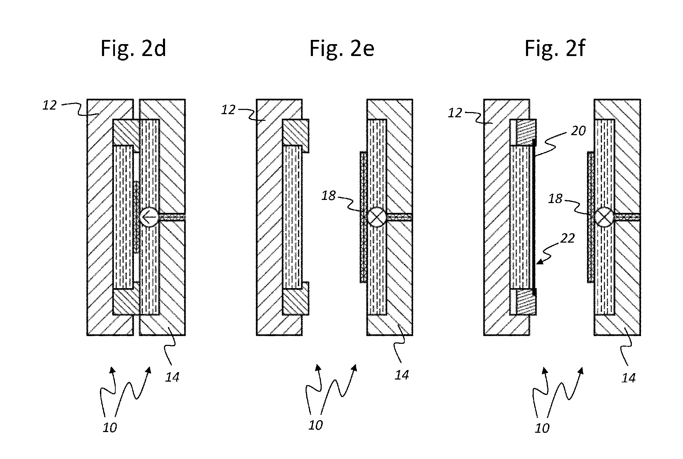

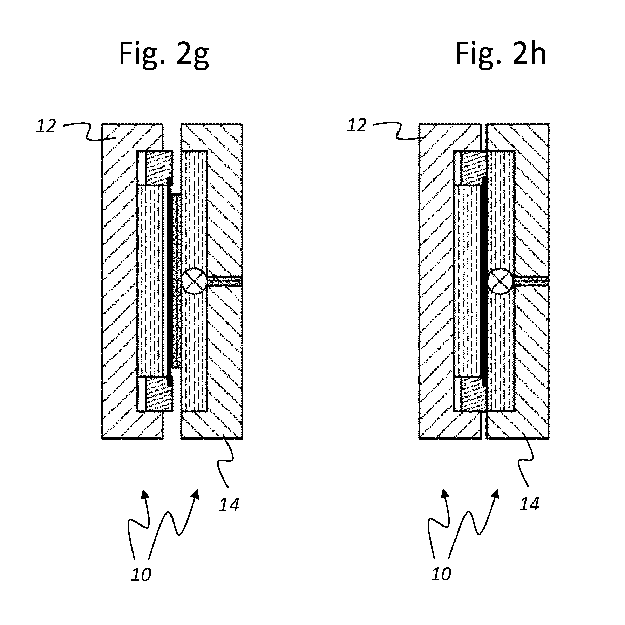

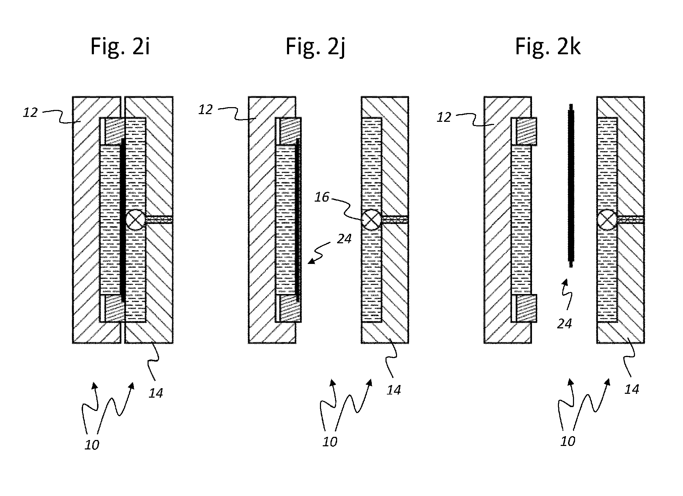

Die insgesamt elf schematischen Darstellungen der Fig. 2 zeigen in elf aufeinander folgenden Prozessschritten die Herstellung eines erfindungsgemäßen thermoplastischen Leichtbaumaterials mit Faserverstärkung in einer zweiteiligen Pressform. So zeigt die Fig. 2a eine geöffnete, noch kalte Pressform 10, die eine Temperatur von ca. 100 °C aufweisen kann. Die zweiteilige Pressform 10 umfasst im gezeigten Ausführungsbeispiel eine untere oder linke Formhälfte 12 und eine obere oder rechte Formhälfte 14. Eine in der rechten oder oberen Formhälfte 14 angeordnete Düse 16 zum Einbringen von thermoplastischem Kunststoff ist noch geschlossen, so dass die Fig. 2a die Ausgangsstellung der Pressform 10 zur Herstellung eines erfindungsgemäßen Leichtmaterials zeigt. Anschließend wird die zweiteilige Form 10 auf eine Temperatur von bspw. ca. 300 °C aufgeheizt (Fig. 2b) und im aufgeheizten Zustand geschlossen (Fig. 2c).

Im aufgeheizten, geschlossenen Zustand wird die Düse 16 geöffnet (Fig. 2d), wodurch das Einspritzen einer Thermoplastschmelze 18 eingeleitet wird. Gemäß Fig. 2e wird danach die Düse 16 geschlossen und damit das Einbringen der Thermoplastschmelze 18 unterbrochen und die zweiteilige Form 10 geöffnet. Die in die Form 10 eingebrachte Schmelze 18 bleibt dabei an einer Seite fixiert, in diesem Fall an der rechten Formhälfte 14, in der sich auch die Düse 16 befindet.

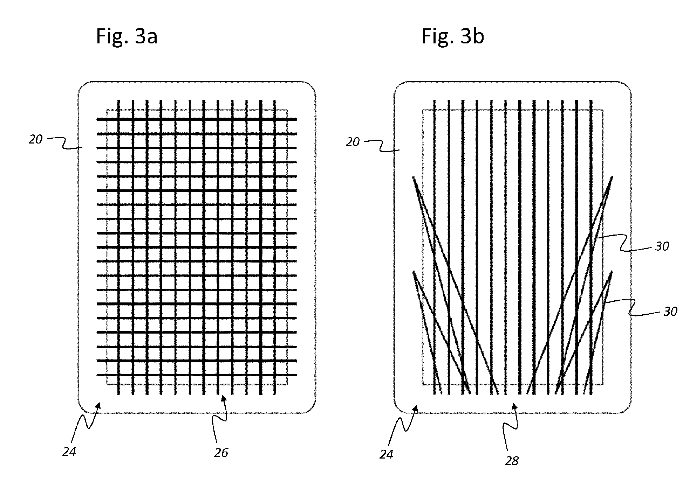

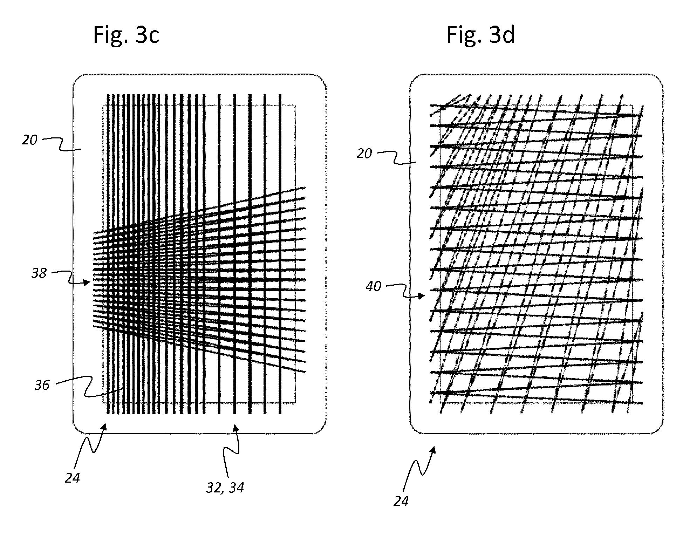

Die Fig. 2f zeigt den folgenden Verfahrensschritt, bei dem ein mit Verstärkungsfasern 22 bestückter Rahmen 20 eingelegt wird, bevor die Form 10 wiederum geschlossen (Fig. 2g) und die Verstärkungsfasern 22 in die Schmelze 18 eingedrückt werden. In einem folgenden Prozess- und Pressschritt (Fig. 2h) werden die Verstärkungsfasern 22 mit der Schmelze 18 imprägniert. Der Rahmen 20 mit den darin angeordneten Verstärkungsfasern 22 kann je nach Bedarf bspw. eine der Faserstrukturierungen gemäß Fig. 3b, Fig. 3c oder Fig. 3d aufweisen.

Danach kann die Form 10 abgekühlt werden (Fig. 2i), wobei sich die Thermoplastschmelze 18 verfestigt und das zu fertigende Leichtbaumaterial 24 gebildet wird. Nach dem Öffnen der abgekühlten Formhälften 12 und 14 (Fig. 2j) kann das fertige Leichtbaumaterial 24 abschließend entnommen werden (Fig. 2k). Da dieses normalerweise über die Faserenden noch mit dem Rahmen 20 verbunden ist, wird dieser durch Ausstanzen oder Ausschneiden vom Bauteil 24 getrennt, so dass er für weitere Fertigungsschritte wiederverwendet werden kann.

Die Fig. 3 zeigt in vier schematischen Darstellungen verschiedene Leichtbaumaterialien 24 aus thermoplastischem Kunststoff 18 und Verstärkungsfasern 22. So zeigt die schematische Ansicht der Fig. 3a einen konventionellen Aufbau eines Leichtmaterials 24 mit herkömmlich gestalteter Gewebeverstärkung 26. Das als Verstärkungsgeflecht 26 dienende Gewebe ist in regelmäßiger, gitternetzartiger Struktur angeordnet, so dass das Material in Längs- wie auch in Querrichtung mit einer ungefähr gleich großen Last beaufschlagt werden kann.

Die schematische Ansicht der Fig. 3b zeigt dagegen eine Faserstruktur 28 eines erfindungsgemäßen Leichtmaterials 24, das in einer Längsrichtung eine Faserverstärkung mit unidirektional ausgerichteten Fasern aufweist, während hierzu orthogonal angeordnete Querfasern entsprechend Fig. 3a fehlen. Stattdessen verfügt das Material 24 über diagonal verlaufende Zusatzverstärkungen 30 an zwei Ecken, so dass von einer belastungsgerechten Verstärkung an definierten Stellen gesprochen werden kann.

In ähnlicher Weise verdeutlicht die schematische Darstellung der Fig. 3c einen Aufbau 32 mit unidirektional ausgerichteten Fasern 34 in einer Längsrichtung, wobei die Abstände der Faserstränge zu einer Längsseite hin abnehmen, so dass sich dort eine Faserverstärkung 36 mit erhöhter Verdichtung findet. Eine lokale Verstärkung 38 mit zahlreichen Fasern, die quer zu den in Längsrichtung angeordneten Fasern 34, findet sich im mittleren Bereich des Materials 24. Zusätzlich sind diese Querfasern 38 aufgefächert, so dass sich eine gezielte Kräfteverteilung ergibt.

Die schematische Darstellung der Fig. 3d zeigt weiterhin einen Misch- oder Hybridaufbau 40 eines Materials 24, bei dem die Fasern in unterschiedlichen Längs-, Quer- und Diagonalrichtungen verlaufen. Zudem können unterschiedliche Fasern eingesetzt werden, so bspw. Glasfasern, Kohlenstofffasern und/oder Aramidfasern, wobei sich die unterschiedlichen Materialhäufungen oder -verteilungen nach den auftretenden Hauptbelastungen des Materials richten können.

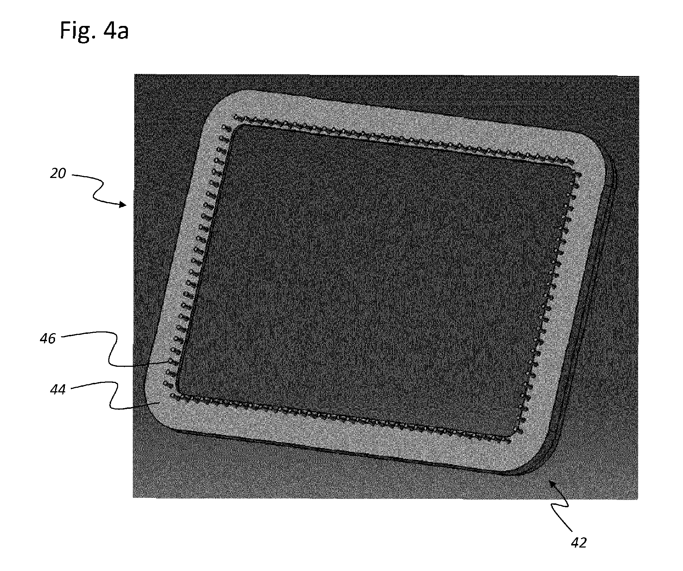

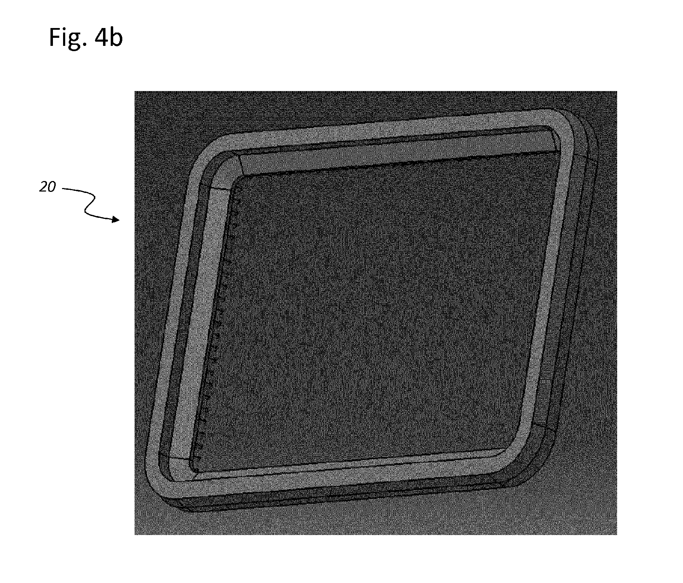

Die beiden perspektivischen Ansichten der Fig. 4 zeigen schließlich ein Ausführungsbeispiel eines Rahmens 20 zur Aufspannung von Gewebe- oder Faserverstärkungen, wie er zur Herstellung eines Leichtbaumaterials 24 gemäß der vorliegenden Erfindung verwendet werden kann. Wie es die Fig. 4a erkennen lässt, kann der Rahmen 20 eine Rechteckform mit ggf. abgerundeten Ecken 42 aufweisen. An einer Flachseite 44 des Rahmens 20 sind entlang jeder Schmal- und Längsseite jeweils eine Vielzahl von Zapfen 46 angeordnet, die zur Aufspannung der Faserverstärkung gemäß Fig. 3 dienen. Gemäß Fig. 4b können die Schmal- und Längsseiten des Rahmens 20 bspw. einen L-förmigen Querschnitt aufweisen, was insbesondere der Anpassung an die Pressform 10 (Fig. 2) dienen kann.

Mit Hilfe des Rahmens 20 gemäß Fig. 4 können die Verstärkungsfasern außerhalb der Pressform 10 aufgespannt werden und mit dem Rahmen 20 in das Presswerkzeug 10 eingebracht werden. Die Abmessungen des Rahmens 20 richten sich nach der Größe des herzustellenden Leichtbaumaterials 24. Die Bespannung des Rahmens 20 erfolgt vorzugsweise auf maschinelle und automatisierte Weise, insbesondere mit Hilfe eines Webroboters (nicht dargestellt), wonach der fertig bespannte Rahmen 20 (vgl. Fig. 3) mittels geeigneter Handlingeinrichtungen, bspw. mittels eines Handlingroboters in die geöffnete Form 10 eingebracht werden kann (vgl. Fig. 2), die anschließend mit dem darin befindlichen Rahmen 20 geschlossen werden kann, um den thermoplastischen Kunststoff 18 in die Form 10 einzuspritzen.

Wie es die Fig. 3 erkennen lässt, hat die Verwendung eines solchen Rahmens 20 den Vorteil, dass die Verstärkungsfasern in gewünschter Weise innerhalb der vom Rahmen 20 ausgespannten Fläche verteilt werden können. So können die Verstärkungsfasern insbesondere in einer auf die Materialeigenschaften des Leichtbaumaterials 24 abgestimmten belastungsgerechten Orientierung in dem Rahmen 20 aufgespannt werden, wodurch sich die Material-, Elastizitäts- und Festigkeitseigenschaften des auf diese Weise hergestellten Bauteils 24 gezielt beeinflussen und definieren lassen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- S1: erster Verfahrensschritt
- S2: zweiter Verfahrensschritt
- S3: dritter Verfahrensschritt
- S4: vierter Verfahrensschritt
- S4a: Vorbereiten des Rahmens (vorbereitender Teil des vierten Verfahrensschritts)
- S4b: Einlegen des Rahmens (fertigungsrelevanter Teil des vierten Verfahrensschritts)
- S5: fünfter Verfahrensschritt
- S6: sechster Verfahrensschritt

- 10: Pressform
- 12: unter Formhälfte, linke Formhälfte
- 14: obere Formhälfte, rechte Formhälfe
- 16: Düse, Spritzdüse
- 18: Schmelze, Thermoplastschmelze, Thermoplastkunststoff
- 20: Rahmen
- 22: Verstärkungsfasern
- 24: Bauteil, Leichtbaumaterial
- 26: Gewebeverstärkung
- 28: Faserstruktur
- 30: Zusatzverstärkung
- 32: unidirektionaler Aufbau
- 34: unidirektional ausgerichtete Fasern
- 36: Faserverstärkung mit erhöhter Verdichtung
- 38: lokale Verstärkung, Querfasern
- 40: Mischaufbau, Hybridaufbau
- 42: Ecke, abgerundete Ecke
- 44: Flachseite
- 46: Zapfen

## Patentansprüche

1. Flächiges Leichtbaumaterial, im Wesentlichen aus Verstärkungsfasern und aus thermoplastischem Kunststoff unter Verwendung eines Rahmens und einer wenigstens zweiteiligen Pressform hergestellt, das in unterschiedlichen Arealen jeweils unterschiedliche mechanische Eigenschaften, insbesondere unterschiedliche Steifigkeiten und/oder unterschiedliche Zug- und/oder Druckfestigkeiten aufweist, wobei auf den in die Pressform einlegbaren Rahmen Verstärkungsfasern in einer auf die Belastung und/oder Festigkeit des Leichtbaumaterials abgestimmten Orientierung und/oder Dichte und/oder Ausrichtung aufgespannt sind.

2. Flächiges Leichtbaumaterial nach Anspruch 1, bei dem insbesondere die Materialstärke und/oder der Faservolumengehalt und/oder die Faserorientierung und/oder der Gewebeaufbau und/oder der Gelegeaufbau in verschiedenen Bereichen des flächigen Leichtbaumaterials jeweils unterschiedlich sind.

3. Flächiges Leichtbaumaterial nach Anspruch 1 oder 2, bei dem in verschiedenen Bereichen des flächigen Leichtbaumaterials Bereiche mit quasi-isotropem Laminataufbau vorliegen.

4. Flächiges Leichtbaumaterial nach einem der Ansprüche 1 bis 3, bei dem in verschiedenen Bereichen des flächigen Leichtbaumaterials Bereiche mit orthotropem Laminataufbau vorliegen.

5. Flächiges Leichtbaumaterial nach einem der Ansprüche 1 bis 4, bei dem in verschiedenen Bereichen des flächigen Leichtbaumaterials Bereiche mit einem Laminataufbau mit Vorzugsorientierung und/oder Bereiche mit unidirektionalem Laminataufbau vorliegen.

6. Flächiges Leichtbaumaterial nach einem der Ansprüche 1 bis 5, bei dem als Verstärkungsfasern Glasfasern, Kohlenstofffasern, Aramidfasern und/oder Basaltfasern verwendet werden.

7. Flächiges Leichtbaumaterial nach einem der Ansprüche 1 bis 6, bei dem als thermoplastischer Kunststoff Polypropylen, thermoplastisches Polyurethan, Polyamid, Polybutylenterephtalat, Polyphenylensulfid, Polyetheretherketon, Polysulfon und/oder Polyphenylsulfon verwendet wird.

8. Flächiges Leichtbaumaterial nach einem der Ansprüche 1 bis 7, bei dem die Verstärkungsfasern in Form von Geweben oder Gelegen eingebracht sind.

9. Flächiges Leichtbaumaterial nach einem der Ansprüche 1 bis 8, bei dem die Verstärkungsfasern in Form von einzelnen Filamentgarnen oder Rovings eingebracht sind.

10. Flächiges Leichtbaumaterial nach einem der Ansprüche 1 bis 7 oder 9, bei dem die Verstärkungsfasern in Form von Filamentgarnen oder Rovings immer an der gleichen Stelle und nach dem gleichen Muster in das flächige Leichtbaumaterial eingebracht sind.

11. Flächiges Leichtbaumaterial nach einem der Ansprüche 1 bis 10, bei dem die Form von der ebenen Platte abweicht und das Leichtbaumaterial entsprechend der Kontur des daraus herzustellenden Bauteils gekrümmt ist.

12. Flächiges Leichtbaumaterial nach einem der Ansprüche 1 bis 11, dessen Verstärkungsfasern in auf die Materialeigenschaften des Leichtbaumaterials abgestimmter belastungsgerechter Orientierung in dem Rahmen aufgespannt sind.

13. Flächiges Leichtbaumaterial nach einem der Ansprüche 1 bis 12, dessen Verstärkungsfasern in Form von trockenen oder vorbenetzten Filamentgarnen oder Rovings auf den Rahmen aufgespannt und/oder in die Pressform eingebracht sind.

14. Flächiges Leichtbaumaterial nach einem der Ansprüche 1 bis 13, bei dem die Verstärkungsfasern in Form von Filamentgarnen oder Rovings an Umlenkpunkten oder Anschlagpunkten am Rahmen oder an der Pressform angeschlagen sind, wodurch die Verstärkungsfasern immer an der gleichen Stelle einbringbar sind.

15. Pressform zur Verwendung bei der Herstellung eines flächigen Leichtbaumaterials gemäß einem der Ansprüche 1 bis 14, bei der zur Beeinflussung der Anhaftung und Ablösung des eingespritzten Thermoplastmaterials an den beiden Seiten der Pressform unterschiedliche Oberflächenstrukturierungen eingearbeitet und/oder unterschiedliche Oberflächenbeschichtungen aufgebracht sind.
